# EUROPÄISCHE PATENTANMELDUNG

(11) **EP 1 308 203 A1**
(43) Veröffentlichungstag der Anmeldung: **07.05.2003**
(21) Anmeldenummer: 02024676.5
(22) Anmeldetag: 05.11.2002
(51) Int. Cl.: B01J 8/04, B01J 8/00, C01B 3/32, C01B 3/38, C01B 3/48

(54) **Apparat zur Erzeugung von Wasserstoff**

(30) Priorität: 06.11.2001 DE 10153935
(71) Anmelder: Viessmann Werke GmbH & Co, 35107 Allendorf (DE)
(72) Erfinder: Britz, Peter, Dr., 35108 Allendorf (DE); Zartenar, Nicolas, Dipl.-Ing., 35091 Coelbe (DE); Ahmadi, Behrouz, Dr., 35108 Allendorf (DE); Holtorf, Juergen, Dr., 35039 Marburg (DE); Heikrodt, Klaus, Dr., 35108 Allendorf (DE)
(74) Vertreter: Wolf, Günter, Dipl.-Ing.

(57) **Zusammenfassung**

Die Erfindung betrifft einen Apparat zur Erzeugung von Wasserstoff zum Betrieb von Brennstoffzellen. Dieser umfasst einen Reformer (1) zur Umwandlung von Kohlenwasserstoffgas und Wasser in Wasserstoff und weitere Reformer-Produkte, wobei dem Reformer (1) zur chemischen Aufbereitung der Reformer-Produkte mindestens eine reaktionsspezifisch angepaßte und mit mindestens einem temperaturspezifisch ausgelegten Wärmetauscher (3) versehene, Wärme abgebende Katalysatorstufe (2) nachgeschaltet ist. Nach der Erfindung ist vorgesehen, dass die mindestens eine Katalysatorstufe (2) quaderförmig ausgebildet ist und einen rechteckförmigen Durchströmungsquerschnitt (4) aufweist, wobei der mindestens eine Wärmetauscher (3) an den rechteckförmigen Durchströmungsquerschnitt (4) der Katalysatorstufe (2) angepaßt ausgebildet ist.

## Beschreibung

Die Erfindung betrifft einen Apparat zur Erzeugung von Wasserstoff zum Betrieb von Brennstoffzellen gemäß dem Oberbegriff des Anspruchs 1.

Aus der DE 693 14 245 T2 (siehe insbesondere Fig. 1) ist ein Reformierungsverfahren zur Erzeugung von Wasserstoff bekannt, bei dem einem Reformer mindestens ein sogenannter Konversionsreaktor (Katalysatorstufe zur Gasreinigung - auch Shiftstufe genannt) mit entsprechendem Wärmetauscher nachgeschaltet ist. Dieses Verfahren wird mittels einer aus vielen räumlich verteilt angeordneten Einzelkomponenten bestehenden Anlage durchgeführt, d.h. die Vorrichtung weist eine wenig kompakte Anordnung auf. Der Reformer ist über Rohrleitungen und zwischengeschaltete Wärmetauscher mit den Katalysatorstufen verbunden. Eine Unterbringung in einem kompakten Gehäuse ist nicht vorgesehen. Gleiches gilt für die Anlage gemäß der DE 692 18 518 T2, bei der der Reformer und die Katalysatorstufe ebenfalls über Rohrleitungen miteinander verbunden sind. Ein Wärmetauscher ist in Form eines mit der Katalysatorstufe kombinierten Plattenwärmetauschers vorgesehen, wobei die einzelnen Schichten abwechselnd vom Produktgas und vom Wärmetauscherfluid durchströmt werden, d. h. die Strömung von Produktgas und Wärmetauscherfluid verläuft im wesentlichen parallel zueinander.

Aus der DE 100 57 537 A1 ist ein Apparat zur Erzeugung von Wasserstoff bekannt, bei dem sowohl der Reformer als auch die drei Katalysatorstufen in einem gemeinsamen Gehäuse angeordnet sind, und zwar mit dem Ziel, einen solchen Apparat auch dem häuslichen Gebrauch zur Wärme und Stromerzeugung zugänglich zu machen. Die bei diesem Apparat verwendeten Katalysatorstufen sind aufgrund einer typischen Fertigungsweise zylinderförmig bzw. oval mit einem kreisflächenförmigen Durchströmungsquerschnitt ausgebildet (derartige zylindrische Katalysatoren sind beispielsweise auch aus dem Automobilbau bekannt). Die beim diesem Apparat erforderlichen und zwischen den Katalysatorstufen angeordneten Wärmetauscher sind dabei entsprechend im wesentlichen an den kreisflächenförmigen bzw. ovalen Durchströmungsquerschnitt angepaßt, d.h. sie sind so ausgebildet, dass sie im Bereich des Durchströmungsquerschnitts eine optimale Wärmeübertragung gewährleisten. Ein solcher Aufbau ist zwar kompakt, hat aber aufgrund der speziell erforderlichen, eine kreisflächenförmige oder ovale Wärmetauschfläche aufweisenden Wärmetauscher einen vergleichsweise hohen Fertigungsaufwand zur Folge.

Der Erfindung liegt daher die Aufgabe zugrunde, den Aufbau des Apparat der eingangs genannten Art, und zwar unter Beibehaltung der kompakten Anordnung der Komponenten, fertigungstechnisch zu vereinfachen und den internen Wärmetausch zwischen Katalysatorstufe und Wärmetauscher noch zu verbessern.

Diese Aufgabe ist mit einem Apparat der eingangs genannten Art durch die im Kennzeichen des Anspruchs 1 genannten Merkmale gelöst.

Der Erfindung liegt also im Kern die Idee zugrunde, den Katalysator mit kreisflächenförmigem bzw. ovalem Durchströmungsquerschnitt durch eine Shiftstufe mit rechteckförmigem (vorzugsweise quadratischem) Querschnitt zu ersetzen, um auf diese Weise ohnehin aus dem Thermenbrennerbau bekannte und bewährte rechteckige Wärmetauscher, die im Vergleich zu kreisflächenförmigen bzw. ovalen fertigungstechnisch wesentlich einfacher herstellbar sind, einsetzen zu können. Um also die bereits in großer Stückzahl hergestellten Wärmetauscher von sogenannten Wandgeräten bzw. -thermen nutzen zu können, werden gemäß der Erfindung andere Katalysatoren, nämlich rechteckförmige, eingesetzt. Die Herstellung derartiger Katalysatoren ist dabei im Vergleich zur Fertigung von kreisflächenförmigen Wärmetauschern zumindest nicht komplizierter, d.h. mit den bekannten Fertigungsmethoden von zylindrischen Katalysatoren lassen sich ebenso gut quaderförmige Shiftstufen mit rechteckigem Durchströmungsquerschnitt herstellen.

Zur Verbesserung der Strömungsführung vom Reformer zur ersten Shiftstufe ist dabei vorzugsweise vorgesehen, dass der Reformer zumindest katalysatorstufenseitig quaderförmig ausgebildet und an den rechteckförmigen Durchströmungsquerschnitt der Katalysatorstufe angepaßt ausgebildet ist.

Der erfinungsgemäß vorgesehene rechteckförmige Wärmetauscher ist darüber hinaus vorzugsweise aus parallel zueinander verlaufenden Rohren gebildet, wobei die Rohre bei einer bevorzugten Ausführungsform zur Verbesserung der Wärmeübertragung mit beabstandet zueinander angeordneten Lamellenblechen versehen sind.

Zur Verbesserung der Wärmeübertragung ist ferner vorzugsweise vorgesehen, dass für jedes Rohr eine bestimmte Strömungsrichtung definiert ist, wobei nebeneinander verlaufende Rohre jeweils eine entgegengesetzt ausgerichtete Strömungsrichtung aufweisen. Dies gewährleistet einen bezogen auf den Durchströmungsquerschnitt der Shiftstufe sehr gleichmäßigen Wärmetausch.

Die abhängigen Ansprüche offenbaren weitere vorteilhafte Ausbildungen der Erfindung.

Der erfindungsgemäße Apparat sowie seine vorteilhaften Weiterbildungen gemäß der abhängigen Ansprüche werden nachfolgend anhand der zeichnerischen Darstellung eines Ausführungsbeispiels näher erkläutert.

Es zeigt schematisch
- Fig. 1: im Schnitt den erfindungsgemäßen Apparat zur Erzeugung von Wasserstoff;
- Fig. 2: einen Schnitt durch den Apparat gemäß Fig. 1 entlang der Linie A-A mit Blick auf den katalysatorseitig quadratisch ausgebildeten Reformer und
- Fig. 3: einen Schnitt durch den Apparat gemäß Fig. 1 entlang der Linie B-B.

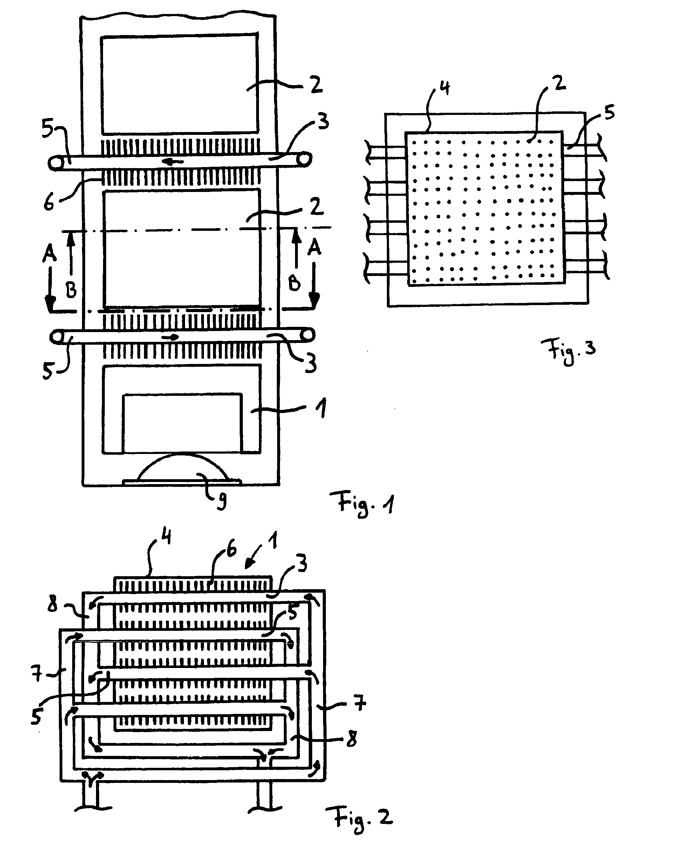

In Fig. 1 ist eine bevorzugte Ausführungsform des Apparats zur Erzeugung von Wasserstoff zum Betrieb von Brennstoffzellen dargestellt. Dieser umfasst einen mit einem Brenner 9 betriebenen Reformer 1 zur Umwandlung von Kohlenwasserstoffgas und Wasser in Wasserstoff und weitere Reformer-Produkte, wobei dem Reformer 1 zur chemischen Aufbereitung der Reformer-Produkte bei der dargestellen Ausführungsform zwei reaktionsspezifisch angepaßte und mit temperaturspezifisch ausgelegten Wärmetauschern 3 versehene, Wärme abgebende Katalysatorstufen 2 (sogenannte Hoch- und Niedertemperaturshiftstufen) nachgeschaltet sind.

Wesentlich für diesen Apparat ist nun, und diesbezüglich wird zunächst auf Fig. 3 verwiesen, dass die Katalysatorstufen 2 quaderförmig ausgebildet sind und einen rechteckförmigen, vorzugsweise quadratischen Durchströmungsquerschnitt 4 aufweisen, wobei die Wärmetauscher 3 - wie insbesondere aus Fig. 2 ersichtlich ist - an den rechteckförmigen Durchströmungsquerschnitt 4 der Katalysatorstufen 2 angepaßt ausgebildet sind. Das Produktgas strömt somit vom Reformer 1 kommend senkrecht durch den Wärmetauscher 3 - und somit senkrecht zur Strömung im Wärmetauscher 3 - zur Katalysatorstufe 2 und von dieser wiederum senkrecht durch einen Wärmetauscher 3 zur nächsten Katalysatorstufe 2.

Bei der dargestellten, bevorzugten Ausführungsform ist darüber hinaus vorgesehen, dass der Reformer 1 zumindest katalysatorstufenseitig quaderförmig ausgebildet und an den rechteckförmigen Durchströmungsquerschnitt 4 der Katalysatorstufen 2 angepaßt ausgebildet ist.

Dabei ist für den Reformer 1 beispielsweise, wie in Fig. 1 dargestellt, eine topfförmige Gestaltung zweckmäßig, d.h. der Reformer 1 ist prinzipiell quaderförmig ausgebildet und mit einer mittigen Ausnehmung versehen, in die der vorzugsweise halbkugelförmig ausgebildete Flächenbrenner 9 hineinragt.

Wie aus Fig. 2 ersichtlich, ist hinsichtlich der Wärmetauscher 3 vorzugsweise vorgesehen, dass diese aus parallel zueinander verlaufenden Rohren 5 gebildet sind. Zur Verbesserung der Wärmeübertragung sind diese Rohre 5 darüber hinaus mit Lamellenblechen 6 versehen. Für jedes Rohr 5 ist, wie durch die Pfeile in den Figuren angedeutet, eine bestimmte Strömungsrichtung definiert, wobei zur Vergleichmäßigung der Wärmeübertragung bezogen auf den Durchströmungsquerschnitt 4 nebeneinander verlaufenden Rohre 5 jeweils entgegengesetzt durchströmt werden.

Um die Zu- und Abführung des Wärmetauschermediums auf einfache Weise zu realisieren, ist vorgesehen, dass die Rohre 5 mit mindestens einem gemeinsamen Zulaufverteiler 7 und mit mindestens einem gemeinsamen Abflußsammler 8 versehen sind. Wie in Fig. 2 dargestellt, kann dieser gemeinsame Verteiler bzw. Sammler jeweils auch zweigeteilt ausgebildet sein, um, wie erläutert, in nebeneinander verlaufenden Rohre 5 jeweils eine entgegensetzte Strömungsrichtung zu realisieren.

Da die Temperaturen im Übergangsbereich zwischen dem Reformer 1 und der Katalysatorstufe 2 noch vergleichsweise hoch sind (etwa 800°C), ist vorzugsweise vorgesehen, dass der dort angeordnete Wärmetauscher 3 aus Edelstahl gebildet ist. Dies berücksichtigend kann ein zwischen zwei Katalysatorstufen 2 angeordneter Wärmetauscher 3 aufgrund der dort herrschenden, niedrigeren Temperaturen aus Kupfer gebildet sein.

### Bezugszeichenliste

- 1: Reformer
- 2: Katalysatorstufe
- 3: Wärmetauscher
- 4: Durchströmungsquerschnitt
- 5: Rohr
- 6: Lamellenblech
- 7: Zulaufverteiler
- 8: Abflußsammler
- 9: Brenner

## Patentansprüche

1. Apparat zur Erzeugung von Wasserstoff zum Betrieb von Brennstoffzellen, umfassend einen Reformer (1) zur Umwandlung von Kohlenwasserstoffgas und Wasser in Wasserstoff und weitere Reformer-Produkte, wobei dem Reformer (1) zur chemischen Aufbereitung der Reformer-Produkte mindestens eine reaktionsspezifisch angepaßte und mit mindestens einem temperaturspezifisch ausgelegten Wärmetauscher (3) versehene, Wärme abgebende Katalysatorstufe (2) nachgeschaltet ist,
**dadurch gekennzeichnet,**
**dass** die mindestens eine Katalysatorstufe (2) quaderförmig ausgebildet ist und einen rechteckförmigen Durchströmungsquerschnitt (4) aufweist, wobei der mindestens eine Wärmetauscher (3) an den rechteckförmigen Durchströmungsquerschnitt (4) der Katalysatorstufe (2) angepaßt ausgebildet ist.

2. Apparat nach Anspruch 1,
**dadurch gekennzeichnet,**
**dass** der Reformer (1) zumindest katalysatorstufenseitig quaderförmig ausgebildet und an den rechteckförmigen Durchströmungsquerschnitt (4) angepaßt ausgebildet ist.

3. Apparat nach Anspruch 1 oder 2,
**dadurch gekennzeichnet,**
**dass** der mindestens eine Wärmetauscher (3) aus parallel zueinander verlaufenden Rohren (5) gebildet ist.

4. Apparat nach Anspruch 3,
**dadurch gekennzeichnet,**
**dass** die Rohre (5) zur Verbesserung der Wärmeübertragung mit Lamellenblechen (6) versehen sind.

5. Apparat nach Anspruch 3 oder 4,
**dadurch gekennzeichnet,**
**dass** für jedes Rohr (5) eine bestimmte Strömungsrichtung definiert ist, die zur Verbesserung der Wärmeübertragung in nebeneinander verlaufenden Rohren (5) jeweils entgegengesetzt orientiert ausgerichtet ist.

6. Apparat nach einem der Anspruch 3 bis 5,
**dadurch gekennzeichnet,**
**dass** die Rohre (5) mit mindestens einem gemeinsamen Zulaufverteiler (7) und mit mindestens einem gemeinsamen Abflußsammler (8) versehen sind.

7. Apparat nach einem der Ansprüche 1 bis 6,
**dadurch gekennzeichnet,**
**dass** der zwischen dem Reformer (1) und der Katalysatorstufe (2) angeordnete Wärmetauscher (3) aus Edelstahl gebildet ist.

8. Apparat nach einem der Ansprüche 1 bis 7,
**dadurch gekennzeichnet,**
**dass** ein zwischen zwei Katalysatorstufen (2) angeordneter Wärmetauscher (3) aus Kupfer gebildet ist.

9. Apparat nach einem der Ansprüche 1 bis 8,
**dadurch gekennzeichnet,**
**dass** der Durchströmungsquerschnitt (4) quadratisch ausgebildet ist.

10. Apparat nach einem der Ansprüche 1 bis 9,
**dadurch gekennzeichnet,**
**dass** der Reformer (1) einen Austrittsquerschnitt aufweist, der dem rechteckigen Eintrittsquerschnitt der Katalysatorstufe (2) entspricht, wobei zwischen diesen beiden Querschnitten der querschnittsangepaßte Wärmetauscher (3) angeordnet ist.
